# EUROPÄISCHE PATENTANMELDUNG

(11) **EP 1 253 406 A1**
(43) Veröffentlichungstag der Anmeldung: **30.10.2002**
(21) Anmeldenummer: 02008780.5
(22) Anmeldetag: 19.04.2002
(51) Int. Cl.: G01F 1/06, G01F 1/10, G01F 15/14, C08L 59/00

(54) **Wasserzähler**

(30) Priorität: 25.04.2001 DE 20107067 U
(71) Anmelder: E. Wehrle GmbH, D-78120 Furtwangen (DE)
(72) Erfinder: Pühler, Thomas, 78048 Villingen-Schwenningen (DE)
(74) Vertreter: Neymeyer, Franz, Dipl.-Ing. (FH)

(57) **Zusammenfassung**

Bei dem Wasserzähler, der mit einer von Wasser durchströmten Meßkammer versehen ist, die wenigstens einen Einströmkanal und wenigstens einen Auslaßkanal aufweist, besteht zumindest die der Wasserströmung ausgesetzte Innenwandung (6) des die Meßkammer enthaltenden Flügelradbechers (5) und der oder die Einströmkanäle (4) aus Polyoxymethylen mit einem Anteil von wenigstens 1 bis 3 % Teflon. Bei diesem Wasserzähler kommt zur Herstellung der Meßkammer ein preisgünstiger Standardwerkstoff zum Einsatz und die Meßkammer ist fertigungstechnisch auf einfache Weise realisierbar.

## Beschreibung

Die Erfindung betrifft einen Wasserzähler mit einer von Wasser durchströmten Meßkammer, die wenigstens einen Einströmkanal und wenigstens einen Auslaßkanal aufweist.

Handelsübliche Wasserzähler besitzen zumeist eine Meßkammer, die aus einem in einem Gehäuse angeordneten Flügelrad besteht, wobei das Gehäuse mindestens einen Einlaßkanal und einen Auslaßkanal für die zu messende Wasserströmung aufweist und wobei das das Gehäuse durchströmende Wasser das Flügelrad in Rotation versetzt.

Im geschäftlichen Verkehr eingesetzte Wasserzähler unterliegen den Bestimmungen des Gesetzes über das Meß- und Eichwesen (Eichgesetz), weshalb Wasserzähler konstruktiv derart zu gestalten sind, daß sie eine ausreichende Meßbeständigkeit bieten. Durch vom Wasser mitgeführte Mikroorganismen und chemische Stoffe wie Kalk, Metalle und andere Mineralien ist die geforderte Meßbeständigkeit jedoch gefährdet, weil diese Mikroorganismen und Stoffe dazu neigen, im Laufe der Gebrauchsdauer des Wasserzählers im Bereich des mindestens einen Einlaßkanals und an anderen Stellen der Innenwandung des vom Wasser durchströmten Gehäuses Ablagerungen zu bilden, die die Strömungsquerschnitte zunehmend verändern und infolgedessen die vom Flügelrad auszuführende Messung der Wasserströmung beeinträchtigen.

Zur Vermeidung einer von Ablagerungen resultierenden Verfälschung der Messung wurde in der Druckschrift DE 40 05 860 C1 vorgeschlagen, einen Wasserzähler innenseitig mit einem Zweikomponenten-Flüssigkunstharz zu beschichten, wobei das Zweikomponenten-Flüssigkunstharz aus einem bei Raumtemperatur flüssigen Epoxidharz aus Epichlorhydrin und Bisphenol A bzw. Bisphenol F und inerten Füllstoffen, Pigmenten und Thixotropierungsmitteln und bei Raumtemperatur flüssigen formulierten Polyaminen mit inerten Füllstoffen, Pigmenten und Thixotropierungsmitteln bestehen soll. Diese Beschichtung trocknet durch Polyaddition der beiden vorstehend aufgeführten reaktiven Bestandteile. Das Aufbringen einer solchen Beschichtung an einem konstruktiv durchaus komplexen Gehäuse wie demjenigen einer Meßkammer eines Wasserzählers, das in seiner Geometrie zur Messung einer Wasserströmung optimiert ist, ist jedoch fertigungstechnisch aufwendig und kostenintensiv.

Der Erfindung liegt daher die Aufgabe zugrunde, einen Wasserzähler der eingangs genannten Art mit einer guten Meßbeständigkeit zu schaffen, bei dem zur Herstellung der Meßkammer ein preisgünstiger Standardwerkstoff zum Einsatz kommt und wobei die Meßkammer fertigungstechnisch auf einfache Weise realisierbar ist.

Die Aufgabe wird erfindungsgemäß dadurch gelöst, daß zumindest die der Wasserströmung ausgesetzte Innenwandung der Meßkammer und der oder die Einströmkanäle aus Polyoxymethylen mit einem Anteil von wenigstens 1 bis 3 % Teflon besteht.

Der Vorteil der vorgeschlagenen Lösung besteht darin, daß die Meßkammer des Wasserzählers nach ihrer Fertigung als Bauteil nicht in einem zusätzlichen Arbeitsgang mit einem Spezialwerkstoff beschichtet werden muß, sondern daß der Meßbecher mit der Meßkammer bzw. das ganze Gehäuse in einem einzigen Arbeitsgang aus einem preisgünstigen, wenn auch modifizierten Standardwerkstoff gefertigt werden kann. Der erfindungsgemäß vorgeschlagene Werkstoff hat die Eigenschaft, die Oberflächenspannung der Wandungen der Meßkammer herabzusetzen und damit einem Anhaften von Ablagerungen entgegenzuwirken. Auch ist es sehr vorteilhaft, daß sich dieser Werkstoff spritzgießtechnisch gut verarbeiten läßt.

In Verbindung mit 3 Figuren sollen die Erfindung und einige vorteilhafte Ausgestaltungen noch kurz erläutert werden. Dabei zeigen
- Fig. 1: ein Gehäuse eines Wasserzählers in Seitenansicht,
- Fig. 2: einen Schnitt II - II durch die Meßkammer des Wasserzählers aus Fig. 1 und
- Fig. 3: eine vergrößerte Detaildarstellung III aus Fig 2.

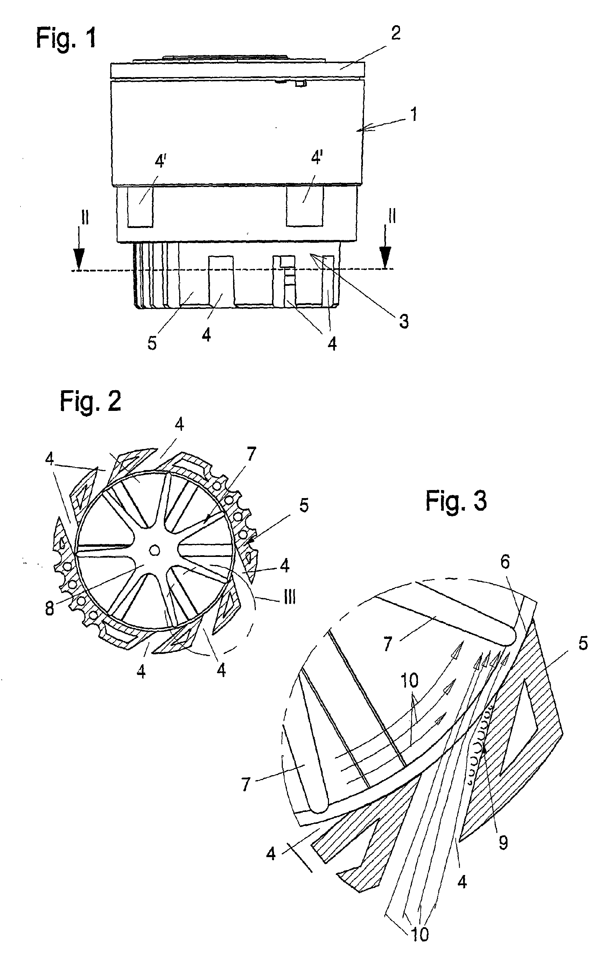

In der Fig. 1 ist in einer Seitenansicht ein Gehäuse 1 eines Wasserzählers dargestellt. Das Gehäuse 1 kann einoder mehrteilig ausgeführt sein. Es ist frontseitig durch einen Meßwerkdeckel 2 abgeschlossen, in dem zum Beispiel durch ein Rollenzählwerk ein mit der erfaßten Wasserströmung korrespondierender Meßwert numerisch angezeigt wird. In dem hier gewählten Ausführungsbeispiel für einen Wasserzähler ist das Gehäuse 1 zylindrisch gestaltet und besitzt in seinem unteren Teil einen becherförmig geformten Gehäuseteil 3mit einer Meßkammer, die an ihrem Umfang mit mehreren Einlaßkanälen 4 für die zu messende Wasserströmung versehen ist. Oberhalb des die Meßkammer enthaltenden Gehäuseteils 3 weißt das Gehäuse 1 Auslaßkanäle 4' auf.

Die Fig. 2 zeigt einen Schnitt II - II durch den Gehäuseteil 3 des Wasserzählers. Der Gehäuseteil 3 besteht in diesem konkreten Beispiel aus einem Flügelradbecher 5 mit einer im wesentlichen zylindrischen Innenwandung 6, wobei in dem Flügelradbecher 5 ein aus sieben Flügeln 7 bestehendes Flügelrad 8 angeordnet ist, das durch die Wasserströmung, die durch die Einlaßkanäle 4 in die Meßkammer 3 strömt, in Rotation versetzt wird. Dabei streichen die Flügel 7 des Flügelrades 8 eng beabstandet an der Innenwandung 6 des Flügelradbechers 5 entlang.

Die Fig. 3 zeigt in einer vergrößerten Detaildarstellung Ablagerungen 9 im Bereich eines Einlaßkanals 4. Als Hilfslinien eingezeichnete Strömungslinien 10 verdeutlichen den Verlauf der Wasserströmung beim Eintritt des Wassers in die Meßkammer 3 sowie im Bereich unmittelbar vor einem Flügel 7 des Flügelrades 8. Infolge von Verwirbelungen der Wasserströmung im Bereich des Einlaßkanals 4 setzen sich dort Ablagerungen 9 ab, die im Laufe der Gebrauchsdauer des Wasserzählers den Strömungsquerschnitt zunehmend verringern und damit die vom Flügelrad 8 auszuführende Messung der Wasserströmung beeinträchtigen.

Um die nachteiligen Ablagerungen insbesondere im Bereich der Einlaßkanäle 4 auf einfache und kostengünstige Weise zu vermeiden, wird zur Herstellung des Flügelradbechers 5 ein Werkstoff verwendet, der die Oberflächenspannung der Innenwandung 6 des Flügelradbechers 5 herabsetzt und damit einem Anhaften von Ablagerungen 9 entgegenwirkt. Polyoxymethylen mit einem Anteil von wenigstens 1 bis 3 % Teflon hat sich als ein Werkstoff mit den gewünschten Eigenschaften erwiesen. Überdies ist dieser vorgeschlagene Werkstoff spritzgießtechnisch gut verarbeitbar. Es ist von Vorteil, die gesamte Meßkammer 3 bzw. das gesamte Gehäuse 1 des Wasserzählers aus diesem Werkstoff zu fertigen.

## Patentansprüche

1. Wasserzähler mit einer von Wasser durchströmten Meßkammer, die wenigstens einen Einströmkanal und wenigstens einen Auslaßkanal aufweist, **dadurch gekenn**
**zeichnet,** daß zumindest die der Wasserströmung ausgesetzte Innenwandung (6) des die Meßkammer enthaltenden Flügelradbechers (5) und der oder die Einströmkanäle (4) aus Polyoxymethylen mit einem Anteil von wenigstens 1 bis 3 % Teflon besteht.

2. Wasserzähler nach Anspruch 1, **dadurch gekennzeichnet, daß** das Gehäuse (1) des Wasserzählers aus Polyoxymethylen mit einem Anteil von wenigstens 1 bis 3 % Teflon besteht.

3. Wasserzähler nach einem der vorangegangenen Ansprüche, **dadurch gekennzeichnet, daß** die Meßkammer (3)
bzw. das Gehäuse (1) des Wasserzählers spritzgießtechnisch gefertigt ist.
